# EUROPÄISCHE PATENTSCHRIFT

(11) **EP 0 659 634 B1**
(45) Veröffentlichungstag und Bekanntmachung des Hinweises auf die Patenterteilung: **12.03.1997**
(21) Anmeldenummer: 94119628.9
(22) Anmeldetag: 13.12.1994
(51) Int. Cl.: B62D 55/08, B62D 55/084, B62D 55/14

(54) **Aufhängeeinrichtung und Spurweiteneinstelleinrichtung für ein Raupenfahrzeug**
Suspension device and device for adjusting the track width of a tracked vehicle
Dispositif de suspension et dispositif pour le réglage de voie d'un véhicule chenillé

(30) Priorität: 22.12.1993 US 172693
(43) Veröffentlichungstag der Anmeldung: 28.06.1995
(73) Patentinhaber: DEERE & COMPANY, Moline, Illinois 61265 (US)
(72) Erfinder: Nagorcka, James Arthur, Tarrington 3301, Victoria (AU); Kizlyk, Mervin Peter, Cedar Falls, Iowa 50613 (US)
(74) Vertreter: Feldmann, Bernhard

(56) Entgegenhaltungen:
- DE-B- 1 205 844
- US-A- 5 018 591

## Beschreibung

Die Erfindung betrifft eine Aufhängeeinrichtung und eine Vorrichtung zur Spurweiteneinstellung für ein Raupenfahrzeug gemäß dem Oberbegriff des Patentanspruchs 1 oder 10.

Gleisketten- oder Raupenfahrzeuge enthalten üblicherweise ein Hauptantriebsrad und ein Leitrad, um die eine Gleisbahn geschlungen ist. Bei der Gleisbahn kann es sich beispielsweise um eine segmentierte Stahlgleiskette oder um eine endlose Gleislaufbahn handeln. Zwischen dem Leitrad und dem Hauptantriebsrad befinden sich Laufrollen, durch die das Fahrzeuggewicht auf die Gleisbahn verteilt wird. Die Laufrollen sind entweder starr oder beweglich an einem Laufrollenrahmen befestigt. Die US-A-4,339,156, US-A-4,519,654 und US-A-4,744,431 offenbaren verschiedene Laufrollenanordnungen. Von besonderem Interesse ist die US-A-4,339,156 bei der eine Laufrolle mit der Leitrolle verbunden ist.

Bei der Anpassung von Raupenfahrzeugen auf landwirtschaftliche Belange ist es manchmal erforderlich, die Spurweite der Gleisbahn zu variieren, indem die Gleisbahn näher an den Fahrzeugrahmen heran oder von diesem weg verschoben wird. Beispiele von Spurweiteneinstellvorrichtungen sind durch die US-A-3,664,449, US-A-3,700,115, US-A-3,712,398, US-A-3,899,038 und US-A-5,072,800 offenbart.

Die der Erfindung zugrunde liegende Aufgabe wird darin gesehen, eine vereinfachte und kompakte Aufhängeeinrichtung für Gleisbahnen anzugeben. Insbesondere soll die Aufhängeeinrichtung eine Spurweiteneinstellung der Gleisbahn ermöglichen.

Die Aufgabe wird erfindungsgemäß durch die Lehre des Patentanspruchs 1 bzw. 10 gelöst. Weitere vorteilhafte Ausgestaltungen und Weiterbildungen der Erfindung gehen aus den Unteransprüchen hervor.

Die erfindungsgemäße Aufhängeeinrichtung für ein Raupenfahrzeug enthält ein erstes Achsenteil, das verschwenkbar an dem Achsengehäuse des Hauptantriebsrades angelenkt ist und sich von hier in Richtung Leitrad erstreckt. Ein zweites Achsenteil ist schwenkbar an dem ersten Achsenteil angelenkt und trägt drehbar das Leitrad. Die beiden Achsenteile sind über eine Drehachse gegeneinander verschwenkbar miteinander verbunden.

Das erste Achsenteil ist über eine Pendelanordnung, welche vertikale und horizontale Mittellinien aufweist, mit dem Fahrzeugrahmen verbunden. Die Pendelanordnung ist verdrehbar mit dem Fahrzeugrahmen und dem ersten Achsenteil verbunden. Die Pendelanordnung weist eine quer zum Fahrzeugrahmen ausgerichtete zylindrische Rahmenöffnung und eine Aufhängeeinrichtungsöffnung auf. Jede der zylindrischen Öffnungen bilden eine Achse. Diese liegen parallel zueinander. Das erste Achsenteil enthält eine Stummelachse, die von der Aufhängeeinrichtungsöffnung aufgenommen wird. Der Fahrzeugrahmen enthält eine Stummelachse, die von der zylindrischen Rahmenöffnung aufgenommen wird. Die zylindrischen Rohre sind parallel und zueinander versetzt ausgerichtet, so daß sich die Stummelachsen sich radial überlappen können.

Das zweite Achsenteil ist teleskopförmig ausgebildet und wird zum Spannen der Gleisbahn, die das Antriebsrad und das Leitrad umschlingt, verwendet. Das zweite Achsenteil enthält ferner einen Laufrollenausleger, der sich ausgehend von der die beiden Achsenteile verbindenden Drehachse nach unten und hinten erstreckt. Ein Laufrollenrahmen ist über eine Laufrollendrehachse verschwenkbar an dem Laufrollenausleger angelenkt. An dem Laufrollenrahmen sind drei Paare von Laufrollen drehbar befestigt.

Die Mittellinie der Pendelanordnung liegt zwischen den vertikalen Ebenen, die durch die die Achsenteile verbindende Drehachse und durch die Laufrollendrehachse definiert sind. Die horizontale Ebene, die durch die die Achsenteile verbindende Drehachse definiert ist, liegt zwischen der horizontalen Ebene, die durch die Laufrollendrehachse definiert ist und der horizontalen Ebene, die durch die Mittellinie der Pendelanordnung definiert ist.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Seitenansicht eines Raupenfahrzeuges, das eine Bodenerhebung anfährt, mit einer erfindungsgemäßen Aufhängung,

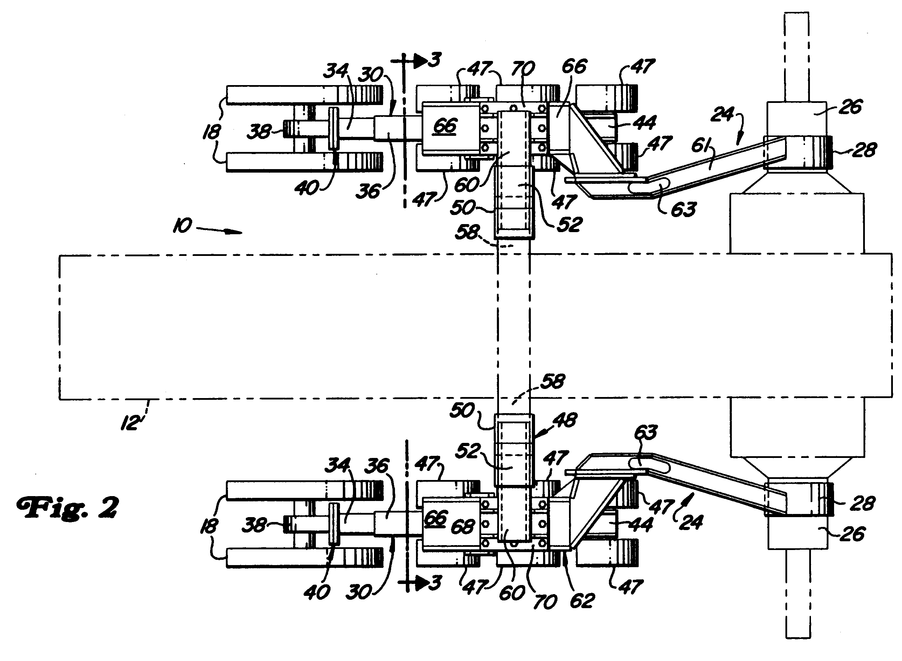

- Fig. 2: die Aufsicht auf eine erfindungsgemäße Aufhängung für ein Raupenfahrzeugfahrgestell,

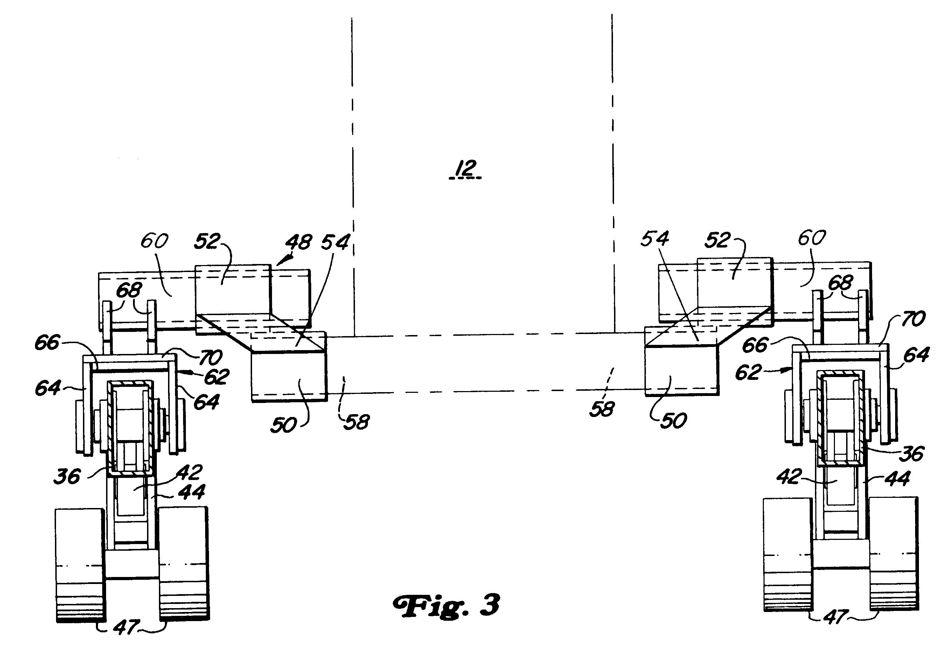

- Fig. 3: einen Querschnitt entlang der Linie 3 - 3 der Fig. 2 und
- Fig. 4: die Seitenansicht eines Raupenfahrzeuges, das eine Bodenmulde anfährt, mit einer erfindungsgemäßen Aufhängung.

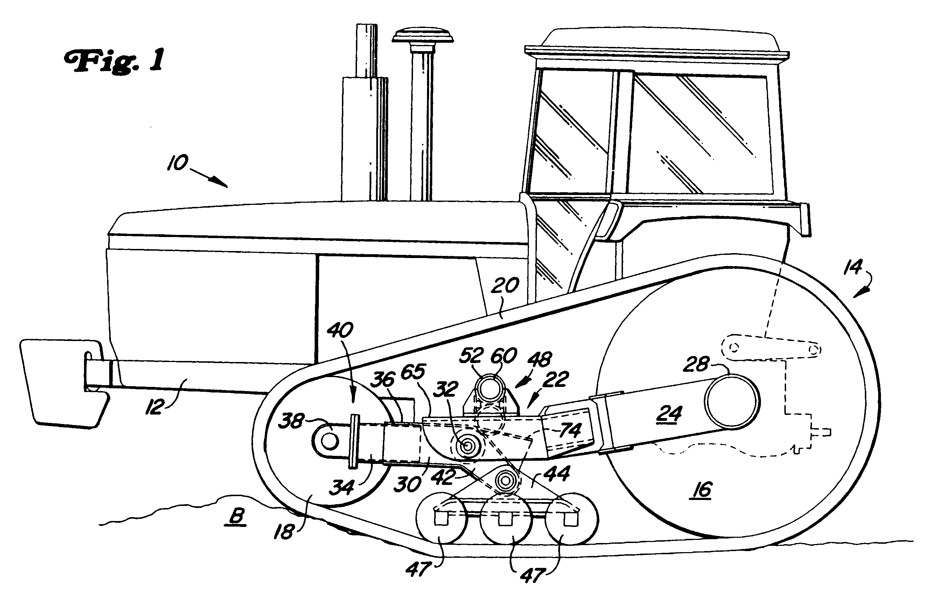

Bei dem in Fig. 1 dargestellten Raupenfahrzeug 10 handelt es sich um einen mit Gleislaufbahnen oder Riemenlaufbahnen bestückten landwirtschaftlichen Traktor, welcher einen Fahrzeugrahmen 12 aufweist, der seinerseits eine Verbrennungskraftmaschine und ein Getriebe zum Antrieb eines Gleislaufbahnfahrgestells 14 enthält. Das Fahrgestell 14 enthält ein durch das Getriebe angetriebenes Hauptantriebsrad 16 und ein Leitrad 18.

Das Fahrgestell 14 ist ferner mit einer Aufhängeeinrichtung 22 versehen. Die Aufhängeeinrichtung 22 enthält ein erstes Achsenteil 24, das über ein zylindrisches Rohr 28 schwenkbar an dem Achsengehäuse 26 des Hauptantriebsrades 16 befestigt ist, und ein zweites Achsenteil 30, das über eine Drehachse 32 schwenkbar mit dem ersten Achsenteil 24 gekoppelt ist. Das Leitrad 18 ist drehbar an dem zweiten Achsenteil 30 aufgehängt. Das erste Achsenteil 24 erstreckt sich von dem Hauptantriebsrad 16 aus in Richtung Leitrad 18, und das zweite Achsenteil 30 erstreckt sich von dem Leitrad 18 aus in Richtung Hauptantriebsrad 16.

Bei dem zweiten Achsenteil 30 handelt es sich um ein teleskopisches Teil mit einem vorderen rechteckförmigen Rohr 34, welches von einem hierzu passenden rechteckförmigen Aufnahmerohr 36 aufgenommen wird. Das Lagerteil 38 für das Leitrad 18 ist über eine Flanschanordnung 40 mit dem vorderen rechteckförmigen Rohr 34 verschraubt. Ein nicht gezeigter Spannhydraulikzylinder sowie eine Rückstoßfeder sind in dem teleskopischen Teil 34, 36 untergebracht, um die Gleislaufbahn 20 zu spannen.

Das zweite Achsenteil 30 enthält ferner einen Laufrollenausleger 42, welcher sich von der Drehachse 32 der Achsenteile 24, 30 aus schräg nach hinten und unten erstreckt. Ein dreieckförmiger Laufrollenrahmen 44 ist über eine Drehachse 46 gelenkig mit dem Laufrollenausleger 42 verbunden. Drei Laufrollenpaare 47 sind drehbar an dem Laufrollenrahmen 44 befestigt.

Das erste Achsenteil 24 ist über eine Pendelanordnung 48 mit dem Fahrzeugrahmen 12 verbunden. Die Pendelanordnung 48 enthält zwei hohle zylindrische Rohre 50 und 52, die miteinander verschweißt und über ein Versteifungsteil 54 miteinander verbunden sind. Das erste zylindrische Rohr 50 enthält eine zylindrische Rahmenöffnung, die der Aufnahme einer von dem Fahrzeugrahmen 12 abstehenden Stummelachse 58 dient. Das zweite zylindrische Rohr 52 enthält eine zylindrische Aufhängeöffnung zur Aufnahme einer zylindrischen Stummelachse 60 des ersten Achsenteils 24 der Aufhängeeinrichtung 22.

Die beiden hohlen zylindrischen Rohre 50 und 52 können jeweils geschlitzte Hülsen mit nach außen weisenden Flanschen aufweisen. Die Flansche werden durch Schrauben verbunden, die, wenn sie angezogen sind, die zylindrischen Rohre 50, 52 auf der zugehörigen Stummelachse 58, 60 in ihrer Lage festhalten.

Mitten durch die beiden Querachsen der Rohre 50 und 52 verläuft eine vertikale Mittellinie. Eine horizontale Mittellinie steht senkrecht auf der vertikalen Mittellinie und kreuzt letztere in einem Punkt, der auf halbem Wege zwischen den Querachsen der Rohre 50 und 52 liegt.

Die beiden Rohre 50 und 52 sind parallel und vorzugsweise übereinander versetzt zueinander ausgerichtet. Die Versetzung ist derart, daß sich die beiden Stummelachsen 58 und 60 nicht störend in die Quere kommen, wenn sie in die Pendelanordnung 48 eingesetzt werden. Auf diese Weise ist eine einzige lange Achse nicht erforderlich. Da die Stummelachsen 58, 60 nicht koaxial zueinander liegen sind unterschiedliche Spurweiten einstellbar, indem die Stummelachsen 58, 60 in die Pendelanordnung 48 unterschiedlich weit eingeschoben werden.

Als Hilfsmittel für eine Einstellung der Spurweite des Fahrgestells 14, können zwei nicht gezeigte Stellschrauben zwischen dem ersten Achsenteil 24 und dem Fahrzeugrahmen 12 angeordnet sein. Ferner kann benachbart zum Achsengehäuse 26 ein Führungsstift an dem ersten Achsenteil 24 befestigt sein, welcher in einem Schlitz geführt ist, der in einem vom Fahrzeugrahmen 12 nach außen abstehenden Teil eingelassen ist. Zur Einstellung der Spurweite wird der Fahrzeugrahmen 12 angehoben, so daß die Gleislaufbahnen 20 nicht mehr den Boden berühren. Dann werden die Flansche der Rohre 48, 50 der Pendelanordnung 48 gelöst und die Stellschrauben verdreht, wobei sich der Gleiskettenrahmen auf den Fahrzeugrahmen 12 zu oder von diesem weg bewegt. Die Führungsstifte auf dem ersten Achsenteil 24 stellen zusammen mit den Stummelachsen 58, 60 und der Pendelanordnung 48 sicher, daß der Gleiskettenrahmen parallel zu dem Fahrzeugrahmen 12 ausgerichtet bleibt.

Der hintere Bereich 61 des ersten Achsenteils 24 ist nach innen zum Fahrzeugrahmen 12 abgewinkelt, um eine Anpassung an das Hauptantriebsrad 16 zu erreichen. Dabei ist das erste Achsenteil 24, ausgehend von seinem mittleren Bereich, in dem es den erforderlichen Freiraum für das Hauptantriebsrad 16 bereitstellt, mit seinem nach hinten weisenden Ende nach außen in Richtung der axialen Mittellinie der Gleislaufbahn 20 abgewinkelt. Eine Platte 63 dient als Verstärkungsplatte für den hinteren Bereich 61 des ersten Achsenteils 24.

Der vordere Bereich 62 des ersten Achsenteils 24 verläuft entlang der axialen Mittellinie der Gleislaufbahn 20. Er enthält ein nach unten offenes U-förmiges Teil, welches nach unten vorstehende Schenkel und einen horizontalen Flansch 66 enthält. Die Stummelachse 60 der Aufhängeeinrichtung 22 ist mit Laschen 68 verschweißt, die von einer horizontalen Platte 70 nach oben abstehen. Die horizontale Platte 70 ist mit dem horizontalen Flansch 66 verschraubt.

Der vordere Bereich 62 des ersten Achsenteils 24 umschließt den abgewinkelten Bereich des zweiten Achsenteils 30. Er enthält ferner eine nach vorn weisende Verlängerung 65, die als oberer Anschlag wirkt. Die Unterseite der horizontalen Platte 70 bildet Aufwärts- und Abwärtsanschläge für die Drehbewegung des zweiten Achsenteils 30. Aus Fig. 1 geht hervor, daß bei einem Auftreffen des Leitrades 18 auf eine Bodenerhebung B das Leitrad 18 nach oben und damit der Laufrollenausleger 42 des zweiten Achsenteils 30 nach unten gedrückt wird, so daß sich die auf die Laufrollenpaare 47 wirkende Last erhöht. Die Aufwärtsbewegung des Leitrades 18 wird durch die Anschlagfläche des rechteckförmigen Aufnahmerohres 36, welches an die Unterseite der Anschlagverlängerung 65 anschlägt, begrenzt. Die obere Fläche des rechteckförmigen Aufnahmerohres 36 kann mit einem Gummipuffer versehen sein, der den Aufschlag an der Anschlagverlängerung 65 dämpft.

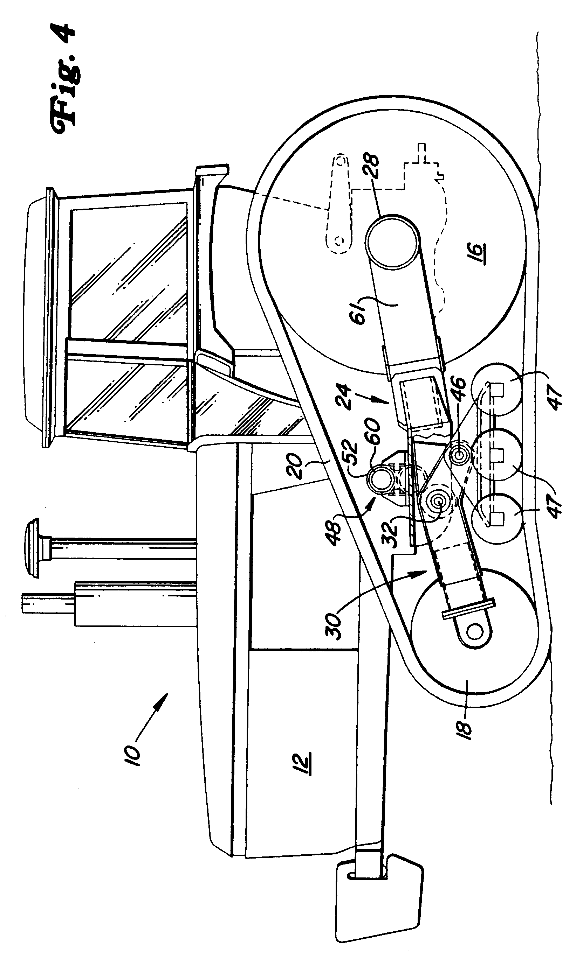

Das zweite Achsenteil 30 enthält eine über die Drehachse 32 hinaus nach hinten ragende Verlängerung 74, die als Abwärtsanschlag wirkt und eine übermäßige durch das Leitrad 18 ausgelöste Abwärtsbewegung verhindert, sofern das Leitrad 18 eine Bodenmulde oder ein Loch anfährt. Erreicht das Leitrad 18 eine Bodenmulde, wie es Fig. 4 zeigt, so wird der Laufrollenausleger 42 des zweiten Achsenteils 30 nach oben geschwenkt bis die Anschlagfläche der Anschlagverlängerung 74 die Unterseite des horizontalen Flansches 70 berührt. Die Anschlagverlängerung 74 kann mit einem Gummidämpfer versehen sein, um den Kontakt mit der Unterseite des horizontalen Flansches 70 zu dämpfen.

Die Anordnung der Drehachsen 32, 46 ist für eine korrekte Betriebsweise der Aufhängeeinrichtung von großer Bedeutung. Insbesondere liegt die vertikale Mittellinie der Pendelanordnung 48 zwischen den vertikalen Ebenen, die durch die Drehachse 46 des Laufrollenrahmens 44 bzw. durch die Drehachse 32 der Achsenteile 24, 30 verlaufen. Ferner liegt die horizontale Ebene, die durch die Drehachse 32 der Achsenteile 24, 30 verläuft, zwischen der horizontalen Mittellinie der Pendelanordnung 48 und der horizontalen Ebene, die durch die Drehachse 46 des Laufrollenrahmens 44 verläuft.

## Patentansprüche

1. Aufhängeeinrichtung für ein einen Fahrzeugrahmen (12) aufweisendes Raupenfahrzeug (10) mit einem Antriebsrad (16), das in einem Achsengehäuse (26) des Fahrzeugrahmens (12) gelagert ist, mit einem Leitrad (18) und mit einer das Antriebsrad (16) und das Leitrad (18) umschlingenden Gleisbahn (20), wobei von dem Achsengehäuse (26) ein erstes Achsenteil (24) schwenkbar getragen wird, welches sich von dem Antriebsrad (16) aus im wesentlichen in Richtung des Leitrades (18) erstreckt und mit dem Fahrzeugrahmen (12) verbindbar ist, dadurch gekennzeichnet, daß ein zweites Achsenteil (30) vorgesehen ist, das das Leitrad (18) drehbar trägt, sich im wesentlichen von dem Leitrad (18) aus in Richtung des Antriebsrades (16) erstreckt und über eine Achsenteildrehachse (32) gelenkig mit dem ersten Achsenteil (24) verbunden ist, und daß das zweite Achsenteil (30) einen Laufrollenausleger (42) aufweist, an dem über eine Laufrollenrahmendrehachse (46) ein verschwenkbarer Laufrollenrahmen (44) angelenkt ist, welcher seinerseits mehrere Laufrollen (47) trägt, die mit der Gleisbahn (20) in Eingriff stehen.

2. Aufhängeeinrichtung nach Anspruch 1, dadurch gekennzeichnet, daß das erste Achsenteil (24) über eine Pendelanordnung (48) mit dem Fahrzeugrahmen (12) verbindbar ist, wobei die Pendelanordnung (48) verschwenkbar am Fahrzeugrahmen (12) und dem ersten Achsenteil (24) angelenkt ist und eine vertikale Mittellinie bildet.

3. Aufhängeeinrichtung nach Anspruch 1 oder 2, dadurch gekennzeichnet, daß das zweite Achsenteil (30) zur Spannung der Gleisbahn teleskopartig ausgebildet ist.

4. Aufhängeeinrichtung nach einem der Ansprüche 1 bis 3, dadurch gekennzeichnet, daß sich der Laufrollenausleger (42) von der Achsenteildrehachse (32) aus im wesentlichen nach schräg hinten und unten erstreckt.

5. Aufhängeeinrichtung nach einem der Ansprüche 2 bis 4, dadurch gekennzeichnet, daß die Achsenteildrehachse (32) eine vertikale Achsenteildrehachsenebene definiert, daß die Laufrollenrahmendrehachse (46) eine vertikale Rahmendrehachsenebene definiert, und daß die vertikale Mittellinie der Pendelanordnung (48) zwischen der Achsenteildrehachsenebene und der Rahmendrehachsenebene liegt.

6. Aufhängeeinrichtung nach einem der Ansprüche 1 bis 5, dadurch gekennzeichnet, daß das zweite Achsenteil (30) eine Anschlagverlängerung (74) aufweist, die bei einer Abwärtsbewegung des Leitrades (18) den Schwenkwinkel des zweiten Achsenteils (30) relativ zum ersten Achsenteil (24) begrenzt.

7. Aufhängeeinrichtung nach Anspruch 6, dadurch gekennzeichnet, daß das erste Achsenteil (24) einen horizontalen Flansch (66) aufweist, der mit der Anschlagverlängerung (74) in Eingriff tritt, um eine Abwärtsbewegung des Leitrades (18) zu begrenzen.

8. Aufhängeeinrichtung nach Anspruch 7, dadurch gekennzeichnet, daß der horizontale Flansch (66) eine Anschlagverlängerung (65) enthält, die bei einer Aufwärtsbewegung des Leitrades (18) den Schwenkwinkel des zweiten Achsenteils (30) relativ zum ersten Achsenteil (24) begrenzt.

9. Aufhängeeinrichtung nach Anspruch 8, dadurch gekennzeichnet, daß das zweite Achsenteil (30) mit dem horizontalen Flansch (66) in Eingriff tritt, um eine Aufwärtsbewegung des Leitrades (18) zu begrenzen.

10. Anordnung zur Spurweiteneinstellung eines einen Rahmen aufweisenden Raupenfahrzeuges (10) mit einem Antriebsrad (16), einem Leitrad (18) und mit einer Aufhängeeinrichtung, die gegebenenfalls nach einem der Ansprüche 1 bis 9 ausgebildet ist und Laufrollen (47) und eine Gleisbahn (20) aufweist, welche das Antriebsrad (16), das Leitrad (18) und die Laufrollen (47) umschlingt, gekennzeichnet durch ein erstes Rohr (50), welches eine zylindrische quer zum Fahrzeugrahmen (12) ausgerichtete Rahmenöffnung aufweist, und ein zweites Rohr (52), das eine quer ausgerichtete zylindrische Aufhängeöffnung aufweist, wobei das zweite Rohr (52) derart am ersten Rohr (50) befestigt ist, daß ihre Öffnungen (50, 52) parallel und versetzt zueinander ausgerichtet sind, und wobei das erste Rohr (50) eine nach außen weisende Rahmenstummelachse (58) und das zweite Rohr (52) eine nach innen weisende Aufhängestummelachse (60) aufnimmt, um das Aufhängesystem mit dem Fahrzeugrahmen (12) zu verbinden.

## Claims

1. Suspension device for a tracked vehicle (10), the tracked vehicle having a frame (12), with a drive wheel (16), mounted in an axle housing (26) of the vehicle frame (12), an idler (18) and a track (20) extending around the drive wheel (16) and the idler (18), in which device a first axle member (24) is borne pivotally by the axle housing (26), extends from the drive wheel (16) essentially in the direction of the idler (18) and can be connected to the vehicle frame (12),
characterised in that
a second axle member (30) is provided which carries the idler (18) rotatably, extends essentially from the idler (18) in the direction of the drive wheel (16) and is joined to the first axle member (24) via an axle member pivot (32), and in that the second axle member (30) has a track roller extension (42), to which a track roller frame (44) is attached pivotally via a track roller frame pivot (46), said frame in turn carrying a plurality of track rollers (47) which engage with the track (20).

2. Suspension device according to claim 1,
characterised in that
the first axle member (24) can be connected to the vehicle frame (12) via a pendulum assembly (48) which is pivotally attached to the vehicle frame (12) and the first axle member (24), forming a vertical centre line.

3. Suspension device according to claim 1 or 2,
characterised in that
the second axle member (30) is designed to be telescopic for tensioning the track.

4. Suspension device according to one of claims 1 to 3,
characterised in that
the track roller extension (42) extends from the axle member pivot (32) essentially at an angle backwards and downwards.

5. Suspension device according to one of claims 2 to 4,
characterised in that
the axle member pivot (32) defines an axle member pivot vertical plane, that the track roller frame pivot (46) defines a frame pivot vertical plane and in that the vertical centre line of the pendulum assembly (48) lies between the axle member pivot plane and the frame pivot plane.

6. Suspension device according to one of claims 1 to 5,
characterised in that
the second axle member (30) has a stop extension (74) which, upon a downward movement of the idler (18), limits the pivoting angle of the second axle member (30) relative to the first axle member (24).

7. Suspension device according to claim 6,
characterised in that
the first axle member (24) has a horizontal flange (66) which engages with the stop extension (74) to limit any downward movement of the idler (18).

8. Suspension device according to claim 7,
characterised in that
the horizontal flange (66) contains a stop extension (65) which, upon an upward movement of the idler (18), limits the pivoting angle of the second axle member (30) relative to the first axle member (24).

9. Suspension device according to claim 8,
characterised in that the second axle member (30) engages with the horizontal flange (66) to limit any upward movement of the idler (18).

10. Assembly for adjusting the track width of a tracked vehicle (10) which has a frame, said assembly comprising a drive wheel (16), an idler (18) and a suspension device, which can be designed in accordance with claims 1 to 9, and track rollers (47) and a track (20) extending around the drive wheel (16), the idler (18) and the track rollers (47), this assembly being characterised by a first tube (50) which has a cylindrical frame aperture aligned transverse to the vehicle frame (12) and a second tube (52) which has a cylindrical transverse suspension system aperture, the second tube (52) being fastened to the first tube (50) in such a way that their apertures (50, 52) are aligned parallel to and offset from one another, and the first tube (50) receiving an outwardly projecting frame stub shaft (58) and the second tube (52) receiving an inwardly projecting suspension system stub shaft (60), in order to connect the suspension system to the vehicle frame (12).

## Revendications

1. Dispositif de suspension pour un véhicule à chenille (10) qui possède un châssis (12), comportant une roue motrice (16), qui est montée dans un logement d'essieu (26) du châssis (12) du véhicule, une roue orientable (18) et une chenille (20) entourant la roue motrice (16) et la roue orientable (18), dans lequel le logement d'essieu (26) porte, de manière qu'il puisse pivoter, un premier élément d'essieu (24), qui s'étend à partir de la roue motrice (16) essentiellement en direction de la roue orientable (18) et peut être relié au châssis (12) du véhicule, caractérisé en ce qu'il est prévu un second élément d'essieu (30), qui porte la roue orientable (18), de manière qu'elle puisse tourner, s'étend essentiellement depuis la roue orientable (18) en direction de la roue motrice (16) et est reliée d'une manière articulée, par l'intermédiaire d'un axe rotatif (32) de l'élément d'essieu, au premier élément d'essieu (24), et que le second élément d'essieu (30) possède un bras en console (42) de support de barbotins, sur lequel est articulé par l'intermédiaire d'un axe rotatif (46) du cadre basculant (44) portant les barbotins, qui pour sa part porte plusieurs barbotins (47), qui engrènent avec la chenille (20).

2. Dispositif de suspension selon la revendication 1, caractérisé en ce que le premier élément d'essieu (24) peut être relié par l'intermédiaire d'un dispositif oscillant (48) au châssis (12) du véhicule, le dispositif oscillant (48) étant articulé de manière à pouvoir pivoter sur le châssis (12) du véhicule et sur le premier élément d'essieu (24) et formant un axe central vertical.

3. Dispositif de suspension selon la revendication 1 ou 2, caractérisé en ce que le second élément d'essieu (30) est agencé de façon télescopique de manière à tendre la chenille.

4. Dispositif de suspension selon l'une des revendications 1 à 3, caractérisé en ce que le bras en console (42) de support des barbotins s'étend essentiellement obliquement vers l'arrière et vers le bas à partir de l'axe rotatif (32) de l'élément d'essieu.

5. Dispositif de suspension selon l'une des revendications 2 à 4, caractérisé en ce que l'axe rotatif (32) de l'élément d'essieu définit un plan vertical de cet axe rotatif, que l'axe rotatif (46) du cadre de support des barbotins définit un plan vertical de l'axe rotatif du cadre et que l'axe central vertical du dispositif oscillant (48) est situé entre le plan de l'axe rotatif de l'élément d'essieu et le plan de l'axe rotatif du cadre.

6. Dispositif de suspension selon l'une des revendications 1 à 5, caractérisé en ce que le second élément d'essieu (30) possède un prolongement de butée (74), qui, dans le cas d'un déplacement descendant de la roue orientable (18), limite l'angle de pivotement du second élément d'essieu (30) par rapport au premier élément d'essieu (24).

7. Dispositif de suspension selon la revendication 6, caractérisé en ce que le premier élément d'essieu (24) possède une bride horizontale (66), qui engrène avec le prolongement de butée (74) pour limiter un déplacement descendant de la roue orientable (18).

8. Dispositif de suspension selon la revendication 7, caractérisé en ce que la bride horizontale (66) contient un prolongement de butée (65), qui lors du soulèvement de la roue orientable (18) limite l'angle de pivotement du second élément d'essieu (30) par rapport au premier élément d'essieu (24).

9. Dispositif de suspension selon la revendication 8, caractérisé en ce que le second élément d'essieu (30) engrène avec la bride horizontale (66) pour limiter un déplacement ascendant de la roue orientable (18).

10. Dispositif pour régler l'empattement d'un véhicule à chenille (10) possédant un châssis comportant une roue motrice (16), une roue orientable (10) et un dispositif de suspension, qui est agencé éventuellement selon l'une des revendications 1 à 9 et possède des barbotins (47) et une chenille (20), qui entoure la roue motrice (16), la roue orientable (18) et les barbotins (47), caractérisé par un premier tube (50), qui possède une ouverture cylindrique, orientée transversalement par rapport au châssis (12) du véhicule, et un second tube (52), qui possède une ouverture cylindrique de suspension, dirigée transversalement, le second tube (52) étant fixé au premier tube (50) de telle sorte que ses ouvertures (50,52) sont parallèles et réciproquement décalées, et dans lequel le premier cube (50) loge un bout d'axe de châssis (58), tourné vers l'extérieur, et que le second tube (52) loge un bout d'axe de suspension (60), qui est dirigé vers l'intérieur, de manière à relier le système de suspension au châssis (12) du véhicule.
